# EUROPEAN PATENT SPECIFICATION

(11) **EP 1 739 542 B1**
(45) Date of publication and mention of the grant of the patent: **03.06.2015**
(21) Application number: 06116172.5
(22) Date of filing: 27.06.2006
(51) Int. Cl.: G06F 3/12, G07G 5/00

(54) **Print system**
Drucksystem
Système d'impression

(30) Priority: 28.06.2005 JP 2005189064; 28.06.2005 JP 2005189066
(43) Date of publication of application: 03.01.2007
(73) Proprietor: STAR MICRONICS CO., LTD., Shizuoka-shi, Shizuoka (JP)
(72) Inventor: OWEN, Lawrence, Suruga-ku, Shizuoka-shi, Shizuoka (JP)
(74) Representative: Osha Liang

(56) References cited:
- US-A- 5 644 682
- US-A1- 2004 030 600
- US-A1- 2004 085 579

## Description

### TECHNICAL FIELD

The present invention relates to a print system.

### BACKGROUND

A commonly-known print system includes a computer which executes an application program and a printer; and causes a printer to produce a printout of an "image including a character string" created by an application program.

For example, a print system, which is known as the above print system, causes a printer to produce a printout of the image of a receipt (hereinafter called a "receipt image") created by, e.g., a POS (Point Of Sales) application program. US2004/0085579 discloses a predefined field command structure for point of sale printer and US2004/0030600 discloses a system and method for producing a customer receipt including a marketing message. In the field where such a print system is utilized, an advertisement or coupon of a specific commodity or another product related thereto can be reliably delivered to a customer who has purchased the commodity. Convenience of such a print system can be enhanced by means of performing delivery of the advertisement or coupon while making an attempt to lessen the efforts required for delivery.

### SUMMARY

The above and other objects are accomplished according to the present invention by means of a print system according to claim 1, a method for controlling a print system according to claim 4 and a program product according to claim 5.

### BRIEF DESCRIPTION OF THE DRAWINGS

In the accompanying drawings:
Fig. 1 is a view showing the entire configuration of a print system according to an embodiment;
Fig. 2 is a view for describing operation of a host computer;
Fig. 3 is a view showing an example receipt image;
Fig. 4 is a view showing an example processed receipt image;
Fig. 5 is a view showing another example processed receipt image;
Fig. 6 is a view showing yet another example processed receipt image;
Fig. 7 is a view for describing output of an image recording medium from a printer;
Fig. 8 is a functional block diagram of the print system according to an embodiment;
Fig. 9 is a view showing an example keyword table;
Fig. 10 is a view showing an example set of processing specifics data;
Fig. 11 is a view showing an example set of environment setting data;
Fig. 12 is a flowchart showing processing executed by a print data processing unit; and
Fig. 13 is a view showing an example journal file.

### DETAILED DESCRIPTION

Embodiments of the present invention will be described in detail below with reference to the drawings.

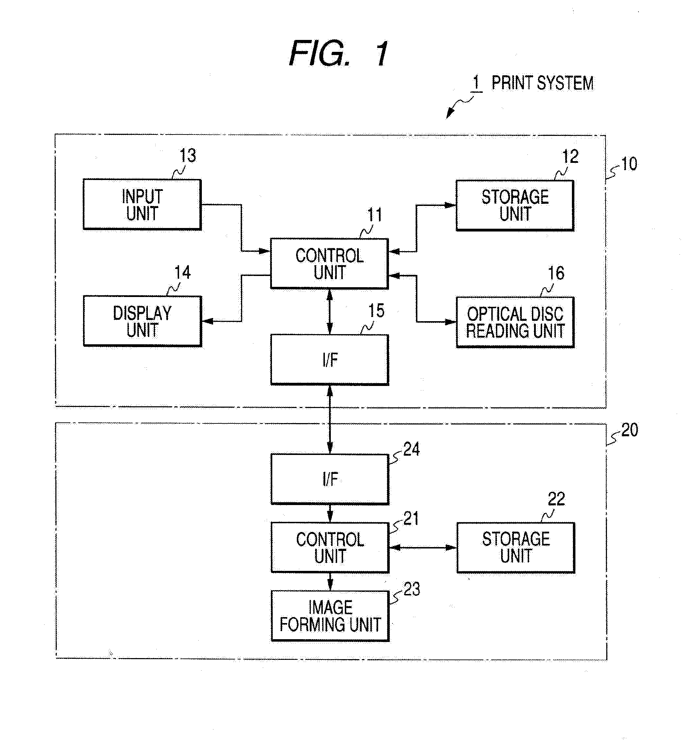

Fig. 1 is a view showing the entire configuration of a print system according to an embodiment. As illustrated, the print system 1 includes a host computer 10 (a print request device), and a printer 20.

As shown in Fig. 1, the host computer 10 is a computer which includes a control unit 11; a storage unit 12; an input unit 13; a display unit 14; an interface (I/F) 15; and an optical disk reading unit 16.

The control unit 11 operates in accordance with an operating system and other programs, which are stored in the storage unit 12, to thus execute various information processing operations. The storage unit 12 is configured by a computer-readable information storage medium. For example, the storage unit 12 is constituted by including ROM (Read Only Memory), RAM (Random Access Memory), and a hard disk drive. The storage unit 12 stores a program to be executed by the control unit 11. The storage unit 12 also operates as work memory which stores various types of data required during the course of processing performed by the control unit 11.

The input unit 13 is, e.g., a keyboard, a mouse, or the like, and inputs to the control unit 11 the data conforming to an input performed by the user. The display unit 14 is, e.g., a display or the like, and displays information in accordance with an instruction input from the control unit 11. In accordance with the instruction input from the control unit 11, the optical disk reading unit 16 reads a program or data stored in an optical disk (an information storage medium) ; e.g., a DVD-ROM or the like.

The interface 15 is for connecting various peripheral devices or information storage mediums (memory cards or the like) to the host computer 10. The interface 15 outputs the data input from a peripheral device, or the like, to the control unit 11. In accordance with the instruction input from the control unit 11, the interface 15 outputs various data to the peripheral device, or the like. The host computer 10 is provided with one or a plurality of connection ports (hereinafter called "USB ports") complying with, e.g., USB (Universal Serial Bus) interface specifications.

In one or more embodiments, Windows OS (Registered Trademark) manufactured by Microsoft Corporation is assumed to be installed in the host computer 10 as an operating system. Further, a POS application program having a receipt creation function (hereinafter described as a "POS application") is also assumed to be installed in the host computer 10.

The host computer 10 is connected to the printer 20 by way of the interface 15 so that data can be exchanged between the computer and the printer. As shown in Fig. 1, the printer 20 includes a control unit 21, a storage unit 22, an image-forming unit 23, and an interface (I/F) 24.

The control unit 21 controls the entirety of the printer 20. The storage unit 22 includes ROM or RAM, and stores various programs and data, which are required for performing printing. The interface 24 receives the data transmitted from the host computer 10, and outputs the thus-received data to the control unit 21. The printer 20 is provided with, e.g., a USB port, as the interface 24. The image-forming unit 23 forms an image, which is based on the data input by the control unit 21, on an image recording medium, such as a print sheet or the like.

The printer 20 herein receives from the host computer 10 raster image data of a predetermined data format (more accurately, command data representing coloring information about respective pixels constituting an image), and forms the raster image data on an image recording medium. The printer 20 has an automatic cutting mechanism; receives from the host computer 10 command data which instruct cutting of the image recording medium, in conjunction with the command data used for forming an image on the image recording medium; and cuts the image recording medium at a given position in a given mode.

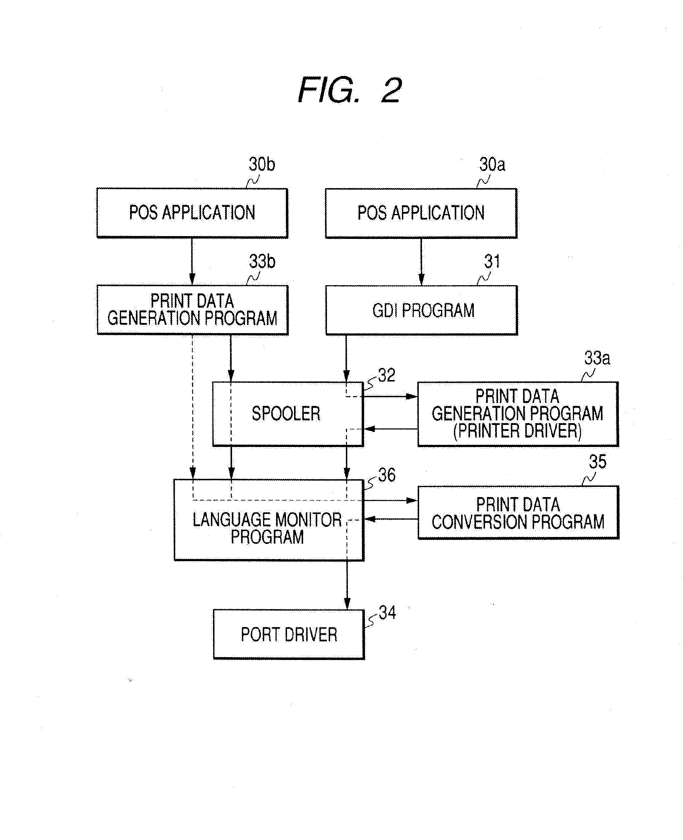

Operation of the host computer 10 performed when the printer 20 is caused to print the receipt image created by the POS application will now be described. Fig. 2 is a view for describing the operation of the host computer 10. Although a POS application program 30a and a POS application program 30b are provided in the drawing, at least one of the application programs is installed in the host computer 10.

When the POS application 30a has issued a command to print the receipt image, a GDI (Graphic Device Interface) program 31 generates meta data representing the command to render the receipt image. This GDI program 31 is a program provided as a part of the operating system, and the meta data do not depend on a device.

The meta data generated by the GDI program 31 are supplied to a print data generation program (a printer driver) 33a by way of a spooler 32. The print data generation program 33a generates print data of a predetermined data format based on meta data. The print data to be generated may be interpretable or uninterpretable for the printer 20. For example, the print data may be interpretable for a printer which differs from the printer 20 in terms of specifications.

The print data generation program 33a herein is assumed to generate as print data, command data representing the kind of a type font, command data showing print details of each line (a string of print characters for each line), command data used for controlling the mechanism of the printer (e.g., command data for instructing a position at which the image recording medium is to be cut), or the like.

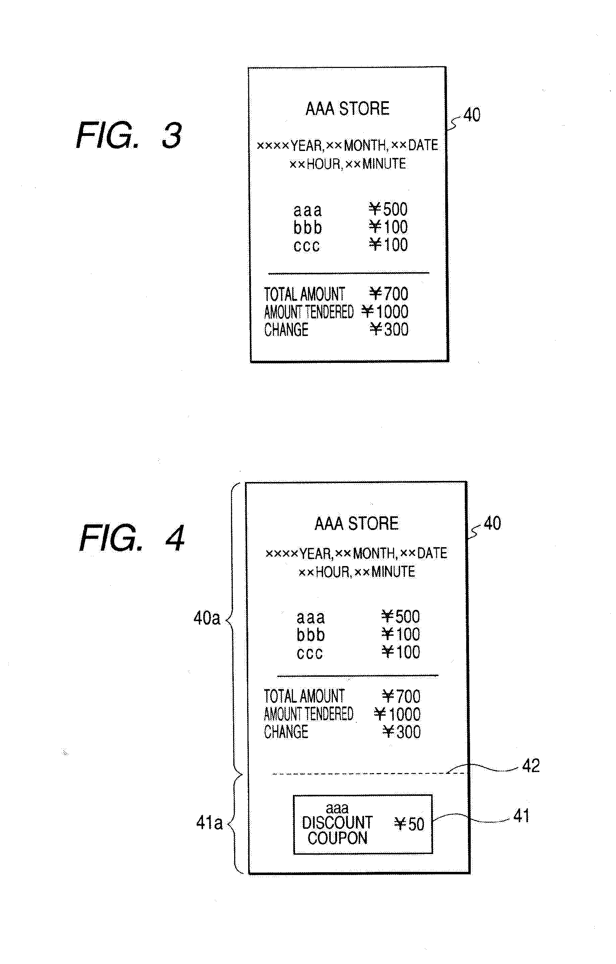

When an instruction for printing a receipt image 40, such as that shown in Fig. 3, has been issued, the print data generation program 33a first generates initialization command data, and supplies the thus-generated initialization command data to the spooler 32. Next, the print data generation program 33a generates command data representing top, bottom, right, and left margins of an image recording medium, and supplies the command data to the spooler 32. Subsequently, for example, the print data generation program 33a generates, as appropriate, command data representing the kind of a type font, command data representing a position at which the image recording medium is to be cut and a mode of cutting the same, or the like; and supplies the command data to the spooler 32.

The print data generation program 33a sequentially generates command data representing print details of each line; e.g., "A" "A" "A" "_" "S" "T" "O" "R" "E" LF, "Y" "E" "A" "R" "M" "O" "N" "T" "H" "D" "A" "T" "E" LF "H" "O" "U" "R" "M" "I" "N" "U" "T" "E" LF, or "a" "a" "a" "\" "5" "0" "0" LF, and supplies the thus-generated command data to the spooler 32. Finally, the print data generation program 33a generates command data showing the end of a page, and supplies the command data to the spooler 32. In the above descriptions, "LF" denotes command data showing a line feed.

When the POS application 30b has issued an instruction for printing a receipt image, a print data generation program 33b generates print data. The print data generation program 33b is a program called by a designation other than a "printer driver," and is, e.g., a program which is supplied as a part of the POS application 30b. The print data generation program 33b generates print data similar to that generated by the print data generation program 33a.

The original print data generated by the print data generation program 33a or 33b are temporarily retained in the storage unit 12 by means of the spooler 32. The spooler 32 sequentially transmits the print data to the printer 20 while monitoring the status of the printer 20. Specifically, the spooler 32 sequentially supplies the print data to the port driver 34 in order to output the original print data from the port connected to the printer 20.

A language monitor program 36 monitors supply of print data from the spooler 32 to the port driver 34. The language monitor program 36 is used for receiving status information from the printer 20 by way of the port driver 34 and supplying the information to a predetermined program (e.g., a status reference program or the like). When having detected the print data supplied from the spooler 32, the language monitor program 36 restricts (hinders) supply of the print data to the port driver 34, and supplies the print data to a print data conversion program 35.

The print data conversion program 35 interprets the print data (command data) sequentially supplied from the language monitor program 36, to thus generate raster image data pertaining to the entirety of a receipt image which is an object of printing. The print data conversion program 35 subjects the raster image data to various types of image processing.

Various image processing operations executed by the print data conversion program 35 will be described.

Based on the print data (more specifically, command data representing print specifics of each line) supplied from the language monitor program 36, the print data conversion program 35 determines whether or not the receipt image includes a predetermined keyword. The keyword is, e.g., the name of a specific commodity, a specific corporate name, or the like. According to the result of determination, the print data conversion program 35 appends an image corresponding to the keyword to the receipt image. For example, when the receipt image includes the name of a specific commodity, an advertisement image, or the like --which is relevant to the commodity or another product related thereto-- is appended to the receipt image. As shown in, e.g., Fig. 3, when the receipt image 40 includes the name of a commodity "aaa, " a coupon image 41 of the commodity "aaa" is appended to the receipt image 40 along with a broken line 42, as shown in Fig. 4. There may also be a case where a plurality of coupon images are appended to the receipt image. In an example shown in, e.g., Fig. 4, there may be a case where a coupon image of a commodity "bbb" is further appended to a position below the coupon image 41 of the commodity "aaa" along with a broken line. In the following descriptions, this function of appending an image corresponding to a keyword to a receipt image, which is executed by the print data conversion program 35, is described as a "keyword-invoked image appending function."

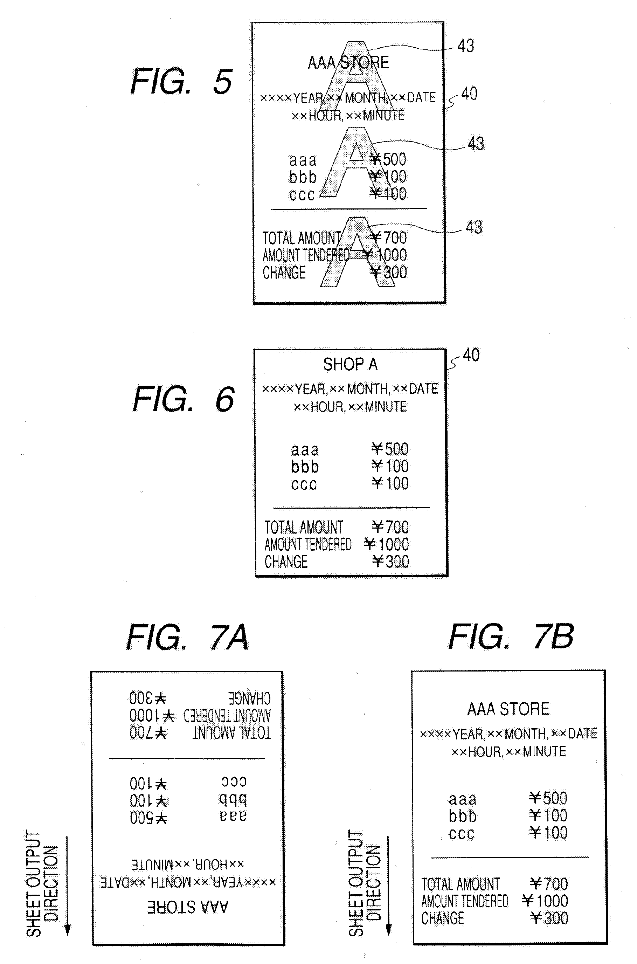

For example, the print data conversion program 35 appends a predetermined background image to the receipt image. For example, a watermark image 43, such as that shown in Fig. 5, is appended to the receipt image 40. In the following descriptions, the function of appending a predetermined background image to a receipt image, which is executed by the print data conversion program 35, is described as a "background image appending function."

For example, the print data conversion program 35 removes at least portions of the top and bottom margins of the receipt image 40, as shown in Fig. 6. In the following descriptions, the function of removing at least portions of the top and bottom margins of the receipt image, which is executed by the print data conversion program 35, is described as a "margin removal function."

For example, as shown in Fig. 7A, the print data conversion program 35 performs image processing for printing the receipt image in a vertically or horizontally inverted manner in order to cause the printer 20 --which outputs an image recording medium such that a portion of the image recording medium, where an upper part of the receipt image 40 is formed, comes first-- to output the image recording medium such that a portion of the image recording medium, where a lower part of the receipt image 40 is formed, comes first, as shown in Fig. 7B. In the following descriptions, the function of printing a receipt image in an inverted manner, which is executed by the print data conversion program 35, is described as an "inverted print function."

The print data conversion program 35 generates print data to be used for causing the printer 20 to form on an image recording medium the raster image data that have been selectively subjected to the above-described various image processing operations. The print data generated by the print data conversion program 35 are output from the port connected to the printer 20 by way of the language monitor program 36 and the port driver 34, and the thus-output print data are supplied to the printer 20.

The print data conversion program 35 and the language monitor program 36 are installed in the host computer 10 by way of an information storage medium; e.g., an optical disk or the like. Further, the print data conversion program 35 and the language monitor program 36 may be provided in an integrated fashion or separately. Moreover, there may be a case where the print data generated by the print data generation program 33b are supplied directly to the language monitor program 36 without involvement of the spooler 32.

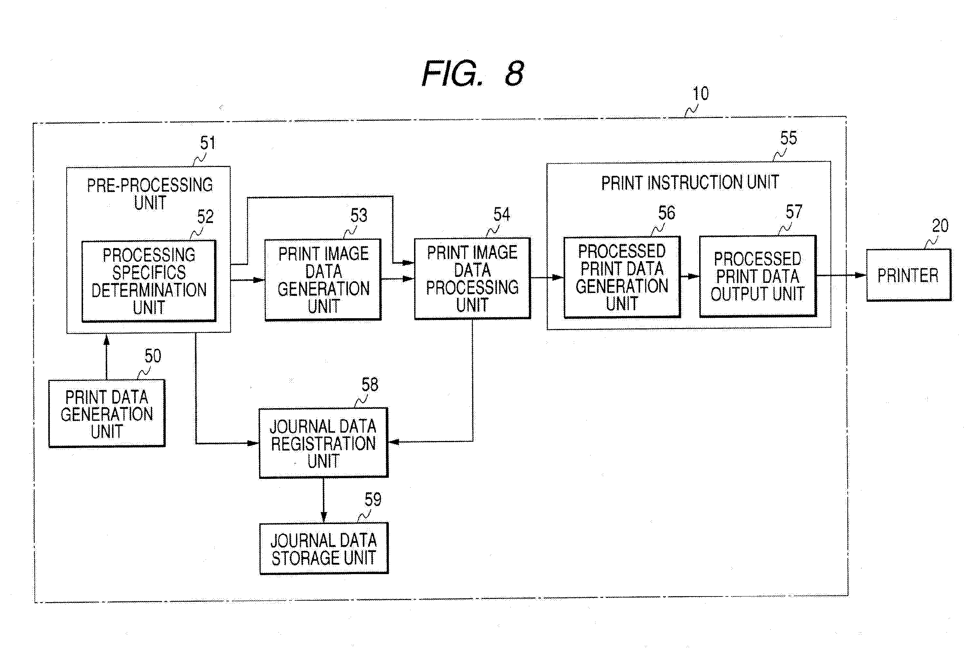

The function to be embodied by the print data conversion program 35 will now be described in detail. Fig. 8 is a functional block diagram showing, among functional blocks embodied by the host computer 10, the functional blocks pertaining to one or more embodiments of the present invention. As illustrated, the host computer 10 includes a print data generation unit 50, a pre-processing unit 51, a print image data generation unit 53, a print image data processing unit 54, a print instruction unit 55, a journal data registration unit 58, and a journal data storage unit 59. The print data generation unit 50 is implemented as a result of the print data generation programs 33a, 33b being executed by the control unit 11. Another functional block is implemented as a result of the print data conversion program 35 and the language monitor program 36 being executed by the control unit 11.

### [1. Print Data Generation Unit]

The print data generation unit 50 generates print data, and supplies the thus-generated print data to the pre-processing unit 51. As mentioned above, the print data generation unit 50 sequentially generates, e.g., command data representing the kind of a type font, command data representing print specifics of each line, and command data representing the end of a page; and sequentially supplies the command data to the pre-processing unit 51.

### [2. Pre-processing Unit]

The pre-processing unit 51 receives the command data sequentially supplied from the print data generation unit 50. The pre-processing unit 51 supplies the thus-received command data to the print image data generation unit 53 and the journal data registration unit 58. The pre-processing unit 51 determines whether or not the received command data are "command data representing the end of a page." When the received command data are the "command data representing the end of a page," a message to this effect is reported to the print image data generation unit 53 and the journal data registration unit 58.

The pre-processing unit 51 may execute, e.g., processing for converting letters from lower case to upper case. When having received command data of, e.g., "a" "a" "a" "_" "_" "_""\" "5" "0" "0" LF, the pre-processing unit 51 may convert the command data into command data of "A" "A" "A" " " "_" "_""\" "5" "0" "0" LF, and supply the thus-converted command data to the print image data generation unit 53 and the journal data registration unit 58.

### [3. Processing Specifics Determination Unit]

The pre-processing unit 51 includes a processing specifics determination unit 52. Based on a character string to be printed (hereinafter simply called "print object character string") which is included in the print data supplied from the print data generation unit 50, the processing specifics determination unit 52 determines processing specifics pertaining to raster image data (i.e., a receipt image to be printed) generated by a print image data generation unit 53 to be described later. In one or more embodiments, the processing specifics determination unit 52 determines whether or not the print object character string includes a specific keyword (a specific character string), and determines processing specifics based on the result of determination.

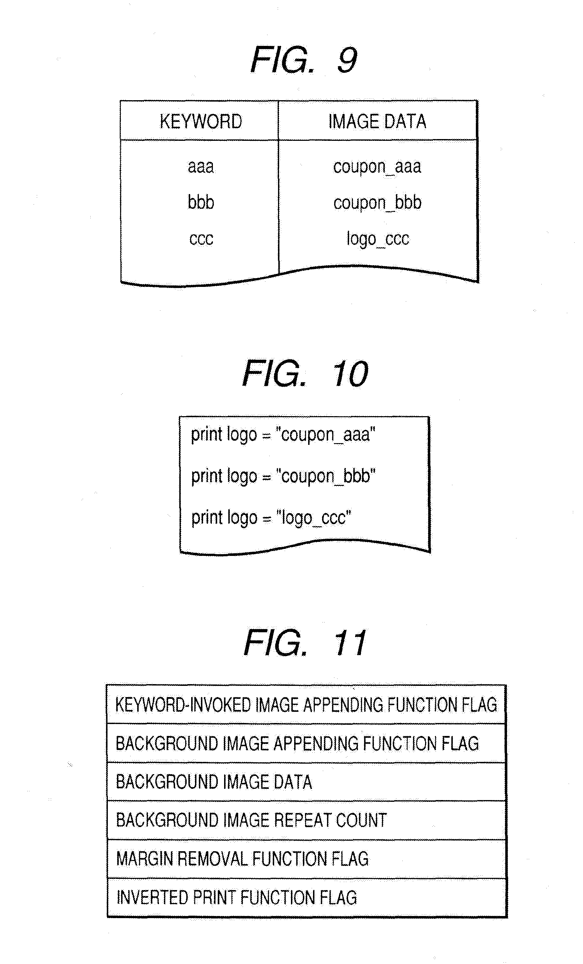

In one or more embodiments, the processing specifics determination unit 52 stores a keyword table as shown in, e.g., Fig. 9. As illustrated, the keyword table includes a "keyword" field and an "image data" field. A keyword; e.g., the name of a specific commodity or a specific corporate name, is stored in the "keyword" field. Information used for specifying the image data corresponding to a keyword is stored in the "image data" field. The name of image data (a file name) is herein assumed to be stored in the image data field. For example, the name of image data, such as a logo image, an advertisement image, or a coupon image pertaining to a specific commodity or another product related to that commodity, is stored in the "image data" field.

Every time the processing specifics determination unit 52 is supplied with the command data representing print details of each line (a print object character string of each line), the processing specifics determination unit 52 determines whether or not the print details of that line include the keyword stored in the "keyword" field. When determining that the keyword is included, the processing specifics determination unit 52 reads the name of image data corresponding to the keyword from the "image data" field, to thus generate processing specific data (information about processing specifics) of a format such as that shown in Fig. 10. In the processing specific data shown in the drawing, "print logo="coupon_aaa," for example, instructs appending an image based on image data "coupon_aaa" to a receipt image. Namely, the processing specific data shown in the drawing serve as a command list used for instructing appending of an image to a receipt image. When having received, from the pre-processing unit 51, a report to the effect that the command data representing the end of a page have been received, the processing specifics determination unit 52 supplies the processing specifics data to the print image data processing unit 54.

Every time the print details of each line are determined to include a keyword, the processing specifics determination unit 52 may generate instruction data of format; e.g., "print logo="coupon_aaa" and supply the instruction data to the print image data processing unit 54. The print image data processing unit 54 may generate processing specifics data such as that shown in Fig. 10.

### [4. Print Image Data Generation Unit]

The print image data generation unit 53 generates raster image data pertaining to the entire receipt image to be printed based on the print data sequentially supplied from the pre-processing unit 51. Specifically, the print image data generation unit 53 generates image data in which pixels --constituting the receipt image-- are associated with coloring information.

The print image data generation unit 53 retains various data that are used for generating raster image data pertaining to an image to be printed based on the print data generated by the print data generation unit 50. For example, the print image data generation unit 53 stores font image data pertaining to the kind of a font which can be specified by the command data generated by the print data generation unit 50. Based on the various types of data, the print image data generation unit 53 generates the raster image data.

Upon receiving command data representing a command to cut an image recording medium, the print image data generation unit 53 generates intermediate control data; e.g., "Feed to cutter=True; Cut percentage=50%; ...." The intermediate control data are supplied to the print instruction unit 55 by way of the print image data processing unit 54.

### [5. Print Image Data Processing Unit]

The print image data processing unit 54 subjects the raster image data supplied from the print image data generation unit 53 to various types of image processing. For example, the raster image data are subjected to image processing whose specifics are based on a print object character string included in the print data generated by the print data generation unit 50. For example, the raster image data are subjected to image processing based on processing specifics data that are supplied from the processing specifics determination unit 52. When the print object character string includes a predetermined keyword, raster image data are subjected to image processing corresponding to the keyword. For example, raster image data are subjected to vertical or horizontal inversion processing.

In one or more embodiments, the print image data processing unit 54 stores environment setting data such as those shown in Fig. 11. As illustrated, the environment setting data include a "keyword-invoked image appending function flag" field, a "background image appending function flag" field, a "background image data" field, a "background image repeat count" field, a "margin removal function flag" field, and an "inverted print function flag" field. Information showing whether or not the keyword-invoked image appending function is used is stored in the "keyword-invoked image appending function flag" field. Information showing whether or not the background image appending function is used is stored in the "background image appending function flag" field. Information for specifying image data pertaining to a background image to be appended to a receipt image is stored in the "background image data" field. The name of image data pertaining to a background image is assumed to be stored herein. The number of times output of a background image is repeated is stored in the "background image repeat count" field. Information showing whether or not the margin removal function is used is stored in the "margin removal function flag" field. Information showing whether or not an inverted print function is used is stored in the "inverted print function flag" field. Specifics of the environment setting data are edited by the user on a predetermined environment setting screen displayed on, e.g., the display unit 14 of the host computer 10.

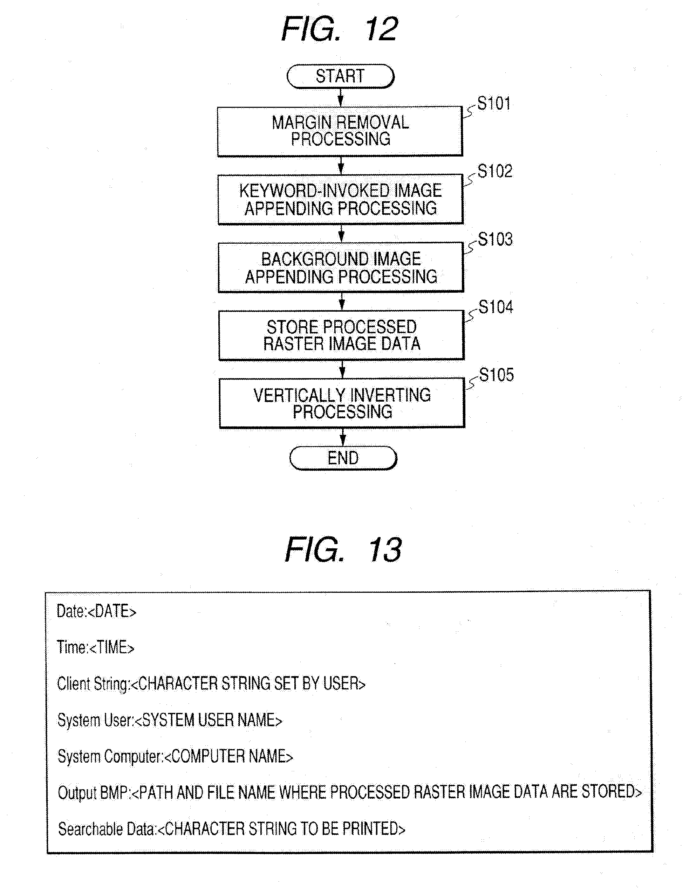

Here, processing to be executed by the print image data processing unit 54 will be described. Fig. 12 is a flowchart showing the processing.

As shown in Fig. 12, the print image data processing unit 54 first performs margin removal processing (S101). The print image data processing unit 54 removes an area of predetermined width from the upper end of the raster image data generated by the print image data generation unit 53, and removes another area of predetermined width from the lower end of the same. Execution of processing pertaining to this step is inhibited according to specifics of the "margin removal function flag" field. The upper and lower areas to be removed may be made so that the user can arbitrarily set the width of the upper and lower areas.

Next, the print image data processing unit 54 performs keyword-invoked image appending processing (S102). The print image data processing unit 54 appends an image to the receipt image based on the processing specific data supplied from the processing specifics determination unit 52. In one or more embodiments, the print image data processing unit 54 receives the processing specifics data (Fig. 10) from the processing specifics determination unit 52, and sequentially acquires, from the processing specifics data, the name of image data pertaining to an image to be appended to the receipt image. Every time the print image data processing unit 54 acquires the name of image data, the print image data processing unit 54 reads from the storage unit 12 image data corresponding to the name of thus-acquired image data, and appends the image data to a lower part of the raster image data along with a predetermined page-break image (a broken line 42 or the like). The read image data may be merged with the raster image data in a translucent manner. Execution of processing pertaining to this step is inhibited according to specifics of the "keyword-invoked image appending function flag" field.

Next, the print image data processing unit 54 executes background image appending processing (S103). The print image data processing unit 54 appends a predetermined background image to the background of the receipt image. For example, the print image data processing unit 54 generates background image data in which an image --whose pixels are vertically and horizontally equal in number with the raster image data and which is specified by the "background image data" field of the environment setting data-- is repeatedly displayed at a given position the number of times specified by the "background image repeat count" field; and in which a transparent attribute is set to an area other than the background image. The print image data processing unit 54 translucently merges the background image data with the raster image data that have undergone processing pertaining to S101 and S102. Execution of processing pertaining to step S103 is inhibited in accordance with specifics of the "background image appending function flag" field.

The print image data processing unit 54 stores the raster image data, which have undergone processing pertaining to S101 to S103, in the storage unit 12 (a hard disk drive) (S104). At this time, the raster image data are stored in a predetermined directory, and a character string consisting of, e.g., a serial number of the printer 20 and the current time, is set as a file name.

Next, the print image data processing unit 54 vertically inverts the raster image data that have undergone processing pertaining to S101 to S103 (S105). Processing pertaining to this step is inhibited in accordance with specifics of the "inverted print function flag" field.

The raster image data that have undergone processing pertaining to S101 to S105 are supplied to the print instruction unit 55. The path or file name into which the raster image data are stored in the storage unit 12 in S104 is supplied to the journal data registration unit 58 which will be described later.

### [6. Print Instruction Unit]

The print instruction unit 55 causes the printer 20 to produce a printout of the raster image data that have been generated by the print image data generation unit 53 and processed by the print image data processing unit 54. The print instruction unit 55 includes a processed print data generation unit 56 and a processed print data output unit 57.

### [7. Processed Print Data Generation Unit]

The processed print data generation unit 56 generates print data used for causing the printer 20 to produce, on an image recording medium, the raster image data processed by the print image data processing unit 54. In one or more embodiments, the processed print data generation unit 56 sequentially generates command data used for instructing the printer 20 coloring information about respective pixels in each line of dots, and supplies the thus-generated command data to the processed print data output unit 57. The processed print data generation unit 56 generates, as appropriate, command data used for causing the printer 20 to perform control whose specifics are indicated by intermediate control data generated by the print image data generation unit 53, and supplies the thus-generated command data to the processed print data output unit 57.

### [8. Processed Print Data Output Unit]

The processed print data output unit 57 sequentially outputs the print data (command data) generated by the processed print data generation unit 56 from the port connected to the printer 20, so that the print data are output to the printer 20. In this case, the printer 20 receives and interprets the command data which are sequentially received from the processed print data output unit 57. In accordance with the command data, forming a receipt image on the image recording medium, cutting the image recording medium, or the like, is executed.

### [9. Journal Data Registration Unit and Storage Unit]

The journal data storage unit 59 stores journal data. The journal data are formed by means of associating at least a portion of the print object character string included in the print data generated by the print data generation unit 50 with "raster image data that are generated by the print image data generation unit 53 based on the print data and are processed by the print image data processing unit 54."

Every time the receipt image is printed, the journal data registration unit 58 generates a journal file such as that shown in Fig. 13, and stores the thus-generated journal file into the journal data storage unit 59. As illustrated, the journal file stores the date and time (Date and Time) when the print data are accepted by the pre-processing unit 51. The journal file also stores a system user name pertaining to execution of the POS application 30a or 30b in the host computer 10 and the name of the host computer 10 (System User and System Computer). In addition, the journal file stores a character string (Client String) which can be set individually by the user of the POS application program 30a or 30b or the user of the printer 20; for example, the name of a person who is in charge of a register. Particularly, information (Output BMP) used for specifying the location where are stored the raster image data having been processed by the print image data processing unit 54 is stored in a journal file, and a print character string included in the print data generated by the print data generation unit 50 (Searchable Data) is stored in the journal file, as well.

The journal data registration unit 58 receives the print data supplied from the pre-processing unit 51, and acquires the print character string included in the print data. The journal data registration unit 58 receives, from the print image data processing unit 54, an input of a path or file name where the processed raster image data (the raster image data stored in S104) are stored. The journal data registration unit 58 generates the journal file based on the path or file name.

As has been described, the print system 1 of one or more embodiments of the present invention is equipped with the keyword-invoked image appending function. When a specific keyword is included in a receipt image, an image corresponding to the keyword is automatically appended to the receipt image. For example, an advertisement or coupon image of a commodity or another product related thereto is automatically appended to the receipt image including the name of a specific commodity. Consequently, for example, an advertisement, a coupon, or the like, of a commodity or another product related thereto can be reliably delivered to a person who has purchased that commodity while efforts are lessened.

As a result of the print system 1 being equipped with an inverted print function, the printer 20 that outputs an image recording medium such that a part of the image recording medium, where an upper portion of a receipt image is formed, comes first can be caused to output an image recording medium such that a part of the image recording medium, where a lower portion of the receipt image is formed, comes first. In a case where the user picks up the image recording medium output from the printer 20 for referral, there may be a case where the user must switch the image recording medium from one hand to the other hand in order to change the orientation of the image recording medium (in order to vertically or horizontally invert the image recording medium). However, the print system 1 can lessen such user's efforts. Implementing the inverted print function does not require the processing specifics determination unit 52, the journal data registration unit 58, and the journal data storage unit 59.

As a result of the print system 1 being provided with the journal data registration unit 58 and the journal data storage unit 59, an attempt can be realized to enable the user, the administrator, or the like, of the POS application program 30a or 30b to comparatively, readily ascertain how the receipt image including an arbitrary character string is actually printed, by means of specifying the arbitrary character string.

In the print system 1, the above-described functions are implemented by the language monitor program 36 and the print data conversion program 35. Hence, implementing the above functions does not involve a necessity for making alterations to the POS application programs 30a, 30b, nor is there a necessity for preparing different programs for the respective POS application programs 30a, 30b.

The present invention is not limited to the above-described embodiments.

For example, the operating system executed by the host computer 10 is not limited to Windows OS (Registered Trademark) manufactured by Microsoft Corporation. Moreover, the application program executed by the host computer 10 is not limited to the POS application programs 30a, 30b. Specifically, an object to be printed by the printer 20 is not limited to the receipt image created by the POS application programs 30a, 30b. A document or image created by another application program may also be the object.

For example, the above descriptions have mentioned that the host computer 10 and the printer 20 are connected together by way of a USB cable. However, the host computer 10 and the printer 20 may also be connected by way of a communications network such as a LAN (Local Area Network) or the like. In this case, the interfaces 15 and 24 may be configured as communications interfaces used for establishing a connection with the communications network.

A program called by a designation other than the "language monitor program" (e.g., a "port emulator" or the like) may be used in place of the language monitor program 36.

For example, a function of previewing a receipt image may also be implemented. When an instruction to preview a receipt image is issued by the POS application programs 30a, 30b, the essential requirement is to display the raster image data (a bitmap file) stored in the storage unit 12 in S104 on the display unit 14 (a preview screen).

The journal data storage unit 59, for example, may be implemented by a storage unit (e.g., a hard disk drive) of another computer connected to the host computer 10 or the printer 20 by way of a communications network.

For example, among the functional blocks shown in Fig. 8, functional blocks other than the print data generation unit 50 may be implemented by the printer 20.

For example, an image corresponding to the keyword may be appended to an upper portion of the receipt image by means of the keyword-invoked image appending function. Alternatively, the image may be appended to a given position in the receipt image. For example, the image may be inserted to a position in the receipt image determined from the position where the keyword is to appear.

When a plurality of keywords are included in the receipt image, at least one of the plurality of keywords is selected by means of the keyword-invoked image appending function, and an image corresponding to the keywords may be appended to the receipt image. For example, priority levels are stored in advance while being assigned to the respective keywords. When a plurality of keywords are included in a receipt image, at least one is selected from the plurality of keywords based on the priority levels assigned to the respective keywords, and an image corresponding to the keyword may be appended to the receipt image. For example, when one keyword appears a plurality of times in a receipt image, an image corresponding to the keyword may be appended only once to the receipt image by means of the keyword-invoked image appending function. In one or more embodiments, after having received processing specifics data based on the result of detection of a keyword from an entire print object character string and raster image data pertaining to the entire receipt image to be printed, the print image data processing unit 54 is to paste an image corresponding to a keyword by means of subjecting the raster image data to image processing (processing operation) based on the processing specifics data. Therefore, appending an image corresponding to a keyword in the manner mentioned above can be performed. Put another way, appending of an image corresponding to a keyword can be performed with a comparatively high degree of freedom.

For example, by means of the keyword-invoked image appending function, the image recording medium may be cut (partially or fully) rather than the broken line 42 being printed between a receipt image main body portion 40a and a coupon image portion 41a (an image portion corresponding to a keyword).

In the above descriptions, when the receipt image (the receipt image that is an object of the print command) prepared by the POS application program 30a or 30b includes a specific keyword, an image (e.g., a logo image, an advertisement image, a coupon image, or the like) corresponding to the keyword is assumed to be appended to the receipt image. However, the following function may also be implemented in place of the above function (the keyword-invoked image appending function) or in conjunction with the above function.

For example, when a key image (a specific image) is included in the receipt image prepared by the POS application program 30a or 30b, the receipt image may be subjected to image processing corresponding to the key image. For example, a coupon image or the like corresponding to the key image may be appended. This function can be implemented in the same manner as is the keyword-invoked image appending function. Specifically, the essential requirement for the processing specifics determination unit 52 is to store a key image and image data, such as a coupon image or the like, such that the image and the image data are associated with each other. Based on the print data supplied from the print data generation unit 50, the processing specifics determination unit 52 determines whether or not the receipt image prepared by the POS application program 30a or 30b includes the key image. The only requirement is to supply the print image data processing unit 54 with processing specifics data (Fig. 10) based on the result of determination.

Alternatively, the receipt image may be subjected to image processing corresponding to timing when the receipt image prepared by the POS application program 30a or 30b is printed. For example, a coupon image or the like corresponding to the timing may be appended. This function can also be implemented in the same manner as the keyword-invoked image appending function. Specifically, the only requirement for the processing specifics determination unit 52 is to store timing requirements and image data such as a coupon image or the like such that the timing requirements and the image data are associated with each other. Here, the timing requirements are information showing, e.g., a time, a time period, a date, a date and time, a day of the week, or another period of time. In response to supply of print data from the print data generation unit 50, the essential requirement for the processing specifics determination unit 52 is to determine whether or not the current date and time or the current time satisfies the timing requirements (whether or not the current date and time or the current time is a predetermined time, whether or not the current date and time or the current time is included in a predetermined period, or the like), and to supply the print image data processing unit 54 with processing specifics data (Fig. 10) based on the result of determination. As above, for example, it becomes possible to issue a coupon when a predetermined time has come, or the like. In this case, it is better to store, in the journal file (Fig. 13), the date and time or the time used for determination by the processing specifics determination unit 52.

As described above with reference to the exemplary embodiments, there is provided a print system that causes a printer to produce a printout of an image "including a character string" created by an application program, such as a POS application program, and which can enhance convenience, as well as providing a method and program for controlling the print system.

According to one or more examples, there is provided at least the following exemplary configurations.
(1) A print system for causing a printer to produce a printout of an image based on print data generated by any one of a plurality of programs and includes data indicating a character string to be printed. The print system includes: a print image data generation unit that generates raster image data pertaining to an image to be printed based on the print data; a processing detail determination unit that determines details of processing for the raster image data based on the character string to be printed; a print image data processing unit that receives the raster image data generated by the print image data generation unit and processing detail information pertaining to processing details determined by the processing detail determination unit, and performs image processing based on the processing detail information on the raster image data; and a print instruction unit that causes the printer to produce a printout of the raster image data subjected to the image processing by the print image data processing unit.
(2) A method for controlling the print system according to (1). The method includes: generating raster image data pertaining to an image to be printed based on the print data; determining details of processing for the raster image data based on the character string to be printed; performing image processing based on processing detail information pertaining to the determined processing details on the generated raster image; and causing the printer to produce a printout of the raster image data subjected to the image processing.
(3) A computer-readable program product for causing a computer to function as a print system for causing a printer to produce a printout of an image based on print data generated by any one of a plurality of programs and includes data indicating a character string to be printed. The program product causes the computer to perform procedures including: generating raster image data pertaining to an image to be printed based on the print data; determining details of processing for the raster image data based on the character string to be printed; performing image processing based on processing detail information pertaining to the determined processing details on the generated raster image; and causing the printer to produce a printout of the raster image data subjected to the image processing.

An information recording medium of the examples is a computer-readable information recording medium on which the program is recorded.

Embodiments of the present invention relate to a print system for causing a printer to produce a printout of an "image based on print data which have been generated by any one of a plurality of programs and include data indicating a character string to be printed." The character string to be printed (print object character string) includes one or a plurality of characters. The characters include control characters; e.g., a space character, a tab character, and the like, as well as including Japanese hiragana characters, Chinese kanji characters, numerals, alphabetic characters, and symbols. In embodiments of the present invention, raster image data pertaining to an image to be printed are generated based on print data. Processing details pertaining to raster image data are determined based on the print object character string. The print image data processing unit accepts an input of raster image data and an input of processing detail information pertaining to determined processing details. The raster image data are subjected to image processing based on the processing detail information. The raster image data having been subjected to image processing by the print image data processing unit are produced as a printout by the printer. According to embodiments of the present invention, the convenience of the print system that causes the printer to produce a printout of an "image including a character string" created by the application program, e.g., a POS application program, can be enhanced.

According to one aspect, the print system may include a print request device which is connected to the printer in a communicable manner and causes the printer to produce a printout of an image based on the print data generated by any of the plurality of programs; the print image data generation unit, the processing detail determination unit, the print image data processing unit, and the print instruction unit may be included in the print request device; and the print instruction unit may generate print data used for causing the printer to produce a printout of raster image data, which have been generated by the print image data generation unit and subjected to the print image data processing by the print image processing unit, and output the print data to the printer.

According to another aspect, the processing detail determination unit may determine whether or not the print object character string includes a specific character string; and processing details corresponding to the specific character string may be determined as processing details for the raster image data when the print object character string is determined to include the specific character string.

In the aspect, the processing details corresponding to the specific character string may be for appending to the print object image an image corresponding to the specific character string; and the processing detail information may include information used for specifying the image corresponding to the specific character string.

According to another aspect, the print system may further include a control unit that stores in a storage at least part of the character string to be printed and the raster image data subjected to the image processing in an associated manner.

According to another aspect, the method may further include storing in a storage at least part of the character string to be printed and the raster image data subjected to the image processing in an associated manner.

According to another aspect, the program product may cause the computer to perform procedures further including storing in a storage at least part of the character string to be printed and the raster image data subjected to the image processing in an associated manner.

According to an example, when there is implemented a print system which subjects an image to be printed (print object image) to processing, whose details are determined based on the character string included in the print object image, to thus produce a printout, the user specifies an arbitrary character string, whereby the user can later ascertain how the image including the character string has been actually printed.

The foregoing description of specific embodiments has been presented for purposes of illustration and description. It is not intended to be exhaustive or to limit the invention to the precise form disclosed. Modifications and variations are possible in light of the above teachings or may be obtained from practice of the invention. The disclosed embodiments were chosen and described in order to explain the principles of the invention and its practical application program to enable one skilled in the art to utilize the invention in various embodiments and with various modifications as are suited to the particular use contemplated. It is intended that the scope of the invention be defined by the claims appended hereto.

## Claims

1. A print system (1) comprising:
a printer (20); and
a print request device (10) communicatively connected to the printer (20), wherein the print request device (10) comprises:
a port (15) configured to communicatively connect the printer (20) and the print request device (10);
a port driver (34) configured to output print data from the port (15) and to supply the print data to the printer (20);
a spooler unit (32) configured to sequentially supply print data to the port driver (34) so that the print data is output from the port (15), the print data being sequentially generated by any one of a plurality of programs (33a, 33b) and including data indicating a character string to be printed;
a monitor unit (36); and
a print data conversion unit (35);
wherein the monitor unit (36) is configured to monitor supply of the print data from the spooler unit (32) to the port driver (34), to restrict the supply of the print data to the port driver (34), and to sequentially supply the print data to the print data conversion unit (35) when the supply of the print data to the port driver (34) is detected,
wherein the print data conversion unit (35) is configured to sequentially generate processed print data based on the supplied print data, and
wherein the print data conversion unit (35) comprises:
a print image data generation unit (53); and
a pre-processing unit (51) configured to sequentially supply the print data to the print image data generation unit (53), the pre-processing unit (51) comprising a processing detail determination unit (52) configured to determine, based on the character string to be printed, details of processing for raster image data;
wherein the print image data generation unit (53) is configured to generate the raster image data based on the print data sequentially supplied by the pre-processing unit (51);
wherein the print data conversion unit (35) further comprises:
a print image data processing unit (54) configured to receive the raster image data generated by the print image data generation unit (53) and processing detail information pertaining to the details of processing determined by the processing detail determination unit (52), and to perform image processing based on the processing detail information on the raster image data; and
a processed print data generation unit (56) configured to generate the processed print data for causing the printer (20) to produce a printout of the raster image data subjected to the image processing by the print image data processing unit (54); wherein the monitor unit (36) comprises:
a processed print data output unit (57) configured to sequentially supply the processed print data generated by the processed print image data generation unit (56) to the port driver (34) and to output the processed print data from the port (15).

2. The print system (1) according to claim 1, wherein the processing detail determination unit (52) determines whether or not the character string to be printed includes a specific character string, and
wherein the processing detail determination unit (52) determines, when determined that the character string includes the specific character string, details of processing corresponding to the specific character string as the details of processing for the raster image data.

3. The print system (1) according to claim 2, wherein the details of processing corresponding to the specific character string include details for appending an image corresponding to the specific character string onto the image to be printed, and
wherein the processing detail information includes information to specify the image corresponding to the specific character string.

4. A method for controlling a print system (1) comprising a printer (20), a print request device (10) communicatively connected to the printer (20), the print request device comprising a port (15) configured to communicatively connect the printer (20) and the print request device (10), a port driver (34) configured to output print data from the port (15) and to supply the print data to the printer (20), a spooler unit (32) configured to sequentially supply print data to the port driver (34) so that the print data is output from the port (15), the print data being sequentially generated by any one of a plurality of programs (33a, 33b) and including data indicating a character string to be printed, a monitor unit (36), and a print data conversion unit (35),
the method comprising:
monitoring by the monitor unit (36), the monitoring comprising monitoring supply of the print data from the spooler unit (32) to the port driver (34), restricting the supply of the print data to the port driver (34), and sequentially supplying the print data to the print data conversion unit (35) when the supply of the print data to the port driver (34) is detected; and
converting, by the print data conversion unit (35), the print data by sequentially generating processed print data based on the supplied print data;
wherein converting the print data comprises:
determining, based on the character string to be printed, details of processing for raster image data;
sequentially supplying the print data to a print image data generation unit (53) within the print data conversion unit (35);
generating, by the print image data generation unit (53), the raster image data based on the sequentially supplied print data;
performing image processing based on processing detail information pertaining to the determined details of processing on the generated raster image data; and
generating the processed print data for causing the printer (20) to produce a printout of the raster image data subjected to the image processing;
wherein monitoring further comprises sequentially supplying the processed print data to the port driver (34) and outputting the processed print data from the port (15).

5. A computer-readable program product for causing a computer (10) to function as a print request device communicatively connected to a printer (20), the print request device (10) comprising a port (15) configured to communicatively connect the printer (20) and the print request device (10), a port driver (34) configured to output print data from the port (15) and to supply the print data to the printer (20), a spooler unit (32) configured to sequentially supply print data to the port driver (34) so that the print data is output from the port (15), the print data being sequentially generated by any one of a plurality of programs (33a, 33b) and including data indicating a character string to be printed, a monitor unit (36), and a print data conversion unit (35),
wherein the program product causes the computer (10) to perform the steps of claim 4.

6. The print system (1) according to claim 1, further comprising a control unit (11) that stores in a storage unit (12) at least part of the character string to be printed and the raster image data subjected to the image processing in an associated manner.

7. The method for controlling the print system according to claim 4, further comprising storing at least part of the character string to be printed and the raster image data subjected to the image processing in an associated manner.

8. The program product according to claim 5, causing the computer (10) to perform procedures further comprising storing in a storage unit (12) at least part of the character string to be printed and the raster image data subjected to the image processing in an associated manner.

## Patentansprüche

1. Drucksystem (1), das umfasst:
einen Drucker (20); und
eine Druckanforderungsvorrichtung (10), die mit dem Drucker (20) kommunikationstechnisch verbunden ist, wobei die Druckanforderungsvorrichtung (10) umfasst:
einen Port (15), der dafür konfiguriert ist, den Drucker (20) und die Druckanforderungsvorrichtung (10) kommunikationstechnisch zu verbinden;
einen Port-Treiber (34), der dafür konfiguriert ist, Druckdaten von dem Port (15) auszugeben und die Druckdaten dem Drucker (20) zuzuführen;
eine Spooler-Einheit (32), die dafür konfiguriert ist, dem Port-Treiber (34) in der Weise sequentiell Druckdaten zuzuführen, dass die Druckdaten von dem Port (15) ausgegeben werden, wobei die Druckdaten durch eines von mehreren Programmen (33a, 33b) sequentiell erzeugt werden und Daten enthalten, die eine zu druckende Zeichenkette angeben;
eine Überwachungseinheit (36); und
eine Druckdaten-Umsetzungseinheit (35);
wobei die Überwachungseinheit (36) dafür konfiguriert ist, die Zufuhr der Druckdaten von der Spooler-Einheit (32) zu dem Port-Treiber (34) zu überwachen, um die Zufuhr der Druckdaten zu dem Port-Treiber (34) zu beschränken und die Druckdaten sequentiell der Druckdaten-Umsetzungseinheit (35) zuzuführen, wenn die Zufuhr der Druckdaten zu dem Port-Treiber (34) detektiert wird,
wobei die Druckdaten-Umsetzungseinheit (35) dafür konfiguriert ist, auf der Grundlage der zugeführten Druckdaten sequentiell verarbeitete Druckdaten zu erzeugen, und
wobei die Druckdaten-Umsetzungseinheit (35) umfasst:
eine Druckbilddaten-Erzeugungseinheit (53); und
eine Vorverarbeitungseinheit (51), die dafür konfiguriert ist, die Druckdaten sequentiell der Druckbilddaten-Erzeugungseinheit (53) zuzuführen, wobei die Vorverarbeitungseinheit (51) eine Verarbeitungseinzelheits-Bestimmungseinheit (52) umfasst, die dafür konfiguriert ist, auf der Grundlage der zu druckenden Zeichenkette Einzelheiten der Verarbeitung für Rasterbilddaten zu bestimmen;
wobei die Druckbilddaten-Erzeugungseinheit (53) dafür konfiguriert ist, die Rasterbilddaten auf der Grundlage der durch die Vorverarbeitungseinheit (51) sequentiell zugeführten Druckdaten zu erzeugen;
wobei die Druckdaten-Umsetzungseinheit (35) ferner umfasst:
eine Druckbilddaten-Verarbeitungseinheit (54), die dafür konfiguriert ist, die durch die Druckbilddaten-Erzeugungseinheit (53) erzeugten Rasterbilddaten zu empfangen und Einzelheitsinformationen, die die durch die Verarbeitungseinzelheits-Bestimmungseinheit (52) bestimmten Einzelheiten der Verarbeitung betreffen, zu verarbeiten und auf der Grundlage der Verarbeitungseinzelheitsinformationen über die Rasterbilddaten eine Bildverarbeitung auszuführen; und
eine Einheit (56) zur Erzeugung verarbeiteter Druckdaten, die dafür konfiguriert ist, die verarbeiteten Druckdaten zu erzeugen, um zu veranlassen, dass der Drucker (20) einen Ausdruck der Rasterbilddaten erzeugt, die durch die Druckbilddaten-Verarbeitungseinheit (54) der Bildverarbeitung ausgesetzt worden sind;
wobei die Überwachungseinheit (36) umfasst:
eine Einheit (57) zur Ausgabe verarbeiteter Druckdaten, die dafür konfiguriert ist, die durch die Einheit (56) zur Erzeugung verarbeiteter Druckbilddaten erzeugten verarbeiteten Druckbilddaten dem Port-Treiber (34) sequentiell zuzuführen und die verarbeiteten Druckdaten von dem Port (15) auszugeben.

2. Drucksystem (1) nach Anspruch 1, wobei die Verarbeitungseinzelheits-Bestimmungseinheit (52) bestimmt, ob die zu druckende Zeichenkette eine spezifische Zeichenkette enthält, und
wobei die Verarbeitungseinzelheits-Bestimmungseinheit (52), wenn sie bestimmt hat, dass die Zeichenkette die spezifische Zeichenkette enthält, Einzelheiten der Verarbeitung, die der spezifischen Zeichenkette entsprechen, als die Einzelheiten der Verarbeitung für die Rasterbilddaten bestimmt.

3. Drucksystem (1) nach Anspruch 2, wobei die Einzelheiten der Verarbeitung, die der spezifischen Zeichenkette entsprechen, Einzelheiten zum Anfügen eines der spezifischen Zeichenkette entsprechenden Bilds an das zu druckende Bild enthalten, und
wobei die Verarbeitungseinzelheitsinformationen Informationen zum Spezifizieren des der spezifischen Zeichenkette entsprechenden Bilds enthalten.

4. Verfahren zum Steuern eines Drucksystems (1), umfassend einen Drucker (20), eine Druckanforderungsvorrichtung (10), die mit dem Drucker (20) kommunikationstechnisch verbunden ist, wobei die Druckanforderungs-vorrichtung einen Port (15), der dafür konfiguriert ist, den Drucker (20) und die Druckanforderungsvorrichtung (10) kommunikationstechnisch zu verbinden, einen Port-Treiber (34), der dafür konfiguriert ist, Druckdaten von dem Port (15) auszugeben und die Druckdaten dem Drucker (20) zuzuführen, eine Spooler-Einheit (32), die dafür konfiguriert ist, dem Port-Treiber (34) in der Weise sequentiell Druckdaten zuzuführen, dass die Druckdaten von dem Port (15) ausgegeben werden, wobei die Druckdaten durch eines von mehreren Programmen (33a, 33b) sequentiell erzeugt werden und Daten enthalten, die eine zu druckende Zeichenkette angeben, eine Überwachungseinheit (36) und eine Druckdaten-Umsetzungseinheit (35) umfasst,
wobei das Verfahren umfasst:
Überwachen durch die Überwachungseinheit (36), wobei das Überwachen das Überwachen der Zufuhr der Druckdaten von der Spooler-Einheit (32) zu dem Port-Treiber (34), das Beschränken der Zufuhr der Druckdaten zu dem Port-Treiber (34) und das sequentielle Zuführen der Druckdaten zu der Druckdaten-Umsetzungseinheit (35), wenn die Zufuhr der Druckdaten zu dem Port-Treiber (34) detektiert wird, umfasst; und
Umsetzen der Druckdaten durch sequentielles Erzeugen verarbeiteter Druckdaten auf der Grundlage der zugeführten Druckdaten durch die Druckdaten-Umsetzungseinheit (35);
wobei das Umsetzen der Druckdaten umfasst:
Bestimmen von Einzelheiten der Verarbeitung für Rasterbilddaten auf der Grundlage der zu druckenden Zeichenkette;
sequentielles Zuführen der Druckdaten zu einer Druckbilddaten-Erzeugungseinheit (53) innerhalb der Druckdaten-Umsetzungseinheit (35);
Erzeugen der Rasterbilddaten auf der Grundlage der sequentiell zugeführten Druckdaten durch die Druckbilddaten-Erzeugungseinheit (53);
Ausführen einer Bildverarbeitung auf der Grundlage von Verarbeitungseinzelheitsinformationen, die die bestimmten Einzelheiten der Verarbeitung betreffen, an den erzeugten Rasterbilddaten; und
Erzeugen der verarbeiteten Druckdaten, um zu veranlassen, dass der Drucker (20) einen Ausdruck der der Bildverarbeitung ausgesetzten Rasterbilddaten erzeugt;
wobei das Überwachen ferner das sequentielle Zuführen der verarbeiteten Druckdaten zu dem Port-Treiber (34) und das Ausgeben der verarbeiteten Druckdaten von dem Port (15) umfasst.

5. Computerlesbares Programmprodukt, um zu veranlassen, dass ein Computer (10) als eine Druckanforderungsvorrichtung fungiert, die mit einem Drucker (20) kommunikationstechnisch verbunden ist, wobei die Druckanforderungsvorrichtung (10) einen Port (15), der dafür konfiguriert ist, den Drucker (20) und die Druckanforderungsvorrichtung (10) kommunikationstechnisch zu verbinden, einen Port-Treiber (34), der dafür konfiguriert ist, Druckdaten von dem Port (15) auszugeben und die Druckdaten dem Drucker (20) zuzuführen, eine Spooler-Einheit (32), die dafür konfiguriert ist, dem Port-Treiber (34) in der Weise sequentiell Druckdaten zuzuführen, dass die Druckdaten von dem Port (15) ausgegeben werden, wobei die Druckdaten durch eines von mehreren Programmen (33a, 33b) sequentiell erzeugt werden und Daten enthalten, die eine zu druckende Zeichenkette angeben, eine Überwachungseinheit (36) und eine Druckdaten-Umsetzungseinheit (35) umfasst,
wobei das Programmprodukt veranlasst, dass der Computer (10) die Schritte nach Anspruch 4 ausführt.

6. Drucksystem (1) nach Anspruch 1, das ferner eine Steuereinheit (11) umfasst, die in einer Speichereinheit (12) wenigstens einen Teil der zu druckenden Zeichenkette und der der Bildverarbeitung ausgesetzten Rasterbilddaten auf zugeordnete Weise speichert.

7. Verfahren zum Steuern des Drucksystems nach Anspruch 4, das ferner das Speichern wenigstens eines Teils der zu druckenden Zeichenkette und der der Bildverarbeitung ausgesetzten Rasterbilddaten auf zugeordnete Weise umfasst.

8. Programmprodukt nach Anspruch 5, das veranlasst, dass der Computer (10) Prozeduren ausführt, die ferner das Speichern wenigstens eines Teils der zu druckenden Zeichenkette und der der Bildverarbeitung ausgesetzten Rasterbilddaten auf zugeordnete Weise in einer Speichereinheit (12) umfassen.

## Revendications

1. Système d'impression (1) comprenant :
une imprimante (20) ; et
un dispositif de demande d'impression (10) connecté en communication à l'imprimante (20), dans lequel le dispositif de demande d'impression (10) comprend :
un port (15) configuré pour connecter en communication l'imprimante (20) et le dispositif de demande d'impression (10) ;
un pilote de port (34) configuré pour délivrer des données d'impression à partir du port (15) et alimenter les données d'impression dans l'imprimante (20) ;
une unité de spouleur (32) configurée pour alimenter séquentiellement des données d'impression dans le pilote de port (34) de sorte que les données d'impression soient délivrées à partir du port (15), les données d'impression étant générées séquentiellement par un quelconque d'une pluralité de programmes (33a, 33b) et incluant des données indiquant une chaîne de caractères à imprimer ;
une unité de moniteur (36) ; et
une unité de conversion de données d'impression (35) ;
dans lequel l'unité de moniteur (36) est configurée pour surveiller l'alimentation des données d'impression de l'unité de spouleur (32) au pilote de port (34), restreindre l'alimentation des données d'impression dans le pilote de port (34), et alimenter séquentiellement les données d'impression dans l'unité de conversion de données d'impression (35) quand l'alimentation des données d'impression dans le pilote de port (34) est détectée,
dans lequel l'unité de conversion de données d'impression (35) est configuré pour générer séquentiellement des données d'impression traitées sur la base des données d'impression alimentées, et
dans lequel l'unité de conversion de données d'impression (35) comprend :
une unité de génération de données d'image d'impression (53) ; et
une unité de prétraitement (51) configurée pour alimenter séquentiellement les données d'impression dans l'unité de génération de données d'image d'impression (53), l'unité de prétraitement (51) comprenant une unité de détermination de détail de traitement (52) configurée pour déterminer, sur la base de la chaîne de caractères à imprimer, des détails de traitement pour des données d'image tramée ;
dans lequel l'unité de génération de données d'image d'impression (53) est configurée pour générer les données d'image tramée sur la base des données d'impression alimentées séquentiellement par l'unité de prétraitement (51) ;
dans lequel l'unité de conversion de données d'impression (35) comprend en outre :
une unité de traitement de données d'image d'impression (54) configurée pour recevoir les données d'image tramée générée par l'unité de génération de données d'image d'impression (53) et des informations de détail de traitement se rapportant aux détails de traitement déterminés par l'unité de détermination de détail de traitement (52), et effectuer un traitement d'image sur la base des informations de détail de traitement sur les données d'image tramée ; et
une unité de génération de données d'impression traitées (56) configurée pour générer les données d'impression traitées pour amener l'imprimante (20) à produire un imprimé des données d'image tramées soumises au traitement d'image par l'unité de traitement de données d'image d'impression (54) ;
dans lequel l'unité de moniteur (36) comprend :
une unité de sortie de données d'impression traitées (57) configurée pour alimenter séquentiellement les données d'impression traitées générées par l'unité de génération de données d'image d'impression traitées (56) dans le pilote de port (34) et délivrer les données d'impression traitées provenant du port (15).

2. Système d'impression (1) selon la revendication 1, dans lequel l'unité de détermination de détail de traitement (52) détermine si la chaîne de caractères à imprimer inclut une chaîne de caractères spécifique ou non, et
dans lequel l'unité de détermination de détail de traitement (52) détermine, quand il est déterminé que la chaîne de caractères inclut la chaîne de caractères spécifique, des détails de traitement correspondant à la chaîne de caractères spécifique comme les détails de traitement pour les données d'image tramée.

3. Système d'impression (1) selon la revendication 2, dans lequel les détails de traitement correspondant à la chaîne de caractères spécifique incluent des détails pour annexer une image correspondant à la chaîne de caractères spécifique sur l'image à imprimer, et
dans lequel les informations de détail de traitement incluent des informations pour spécifier l'image correspondant à la chaîne de caractères spécifique.

4. Procédé de commande d'un système d'impression (1) comprenant une imprimante (20), un dispositif de demande d'impression (10) étant connecté en communication à l'imprimante (20), le dispositif de demande d'impression comprenant un port (15) configuré pour connecter en communication l'imprimante (20) et le dispositif de demande d'impression (10), un pilote de port (34) configuré pour délivrer des données d'impression à partir du port (15) et alimenter les données d'impression dans l'imprimante (20), une unité de spouleur (32) configurée pour alimenter séquentiellement des données d'impression dans le pilote de port (34) de sorte que les données d'impression soient délivrées à partir du port (15), les données d'impression étant générées séquentiellement par un quelconque d'une pluralité de programmes (33a, 33b) et incluant des données indiquant une chaîne de caractères à imprimer, une unité de moniteur (36) et une unité de conversion de données d'impression (35), le procédé comprenant :
la surveillance par l'unité de moniteur (36), la surveillance comprenant la surveillance de l'alimentation des données d'impression de l'unité de spouler (32) au pilote de port (34), la restriction de l'alimentation des données d'impression dans le pilote de port (34), et l'alimentation séquentielle des données d'impression dans l'unité de conversion de données (35) quand l'alimentation des données d'impression dans le pilote de port (34) est détectée ; et
la conversion, par l'unité de conversion de données d'impression (35), des données d'impression en générant séquentiellement des données d'impression traitées sur la base des données d'impression alimentées ;
dans lequel la conversion des données d'impression comprend :
la détermination, sur la base de la chaîne de caractères à imprimer, de détails de traitement pour des données d'image tramée ;
l'alimentation séquentielle des données d'impression dans une unité de génération de données d'image d'impression (53) à l'intérieur de l'unité de conversion de données d'impression (35) ;
la génération, par l'unité de génération de données d'image d'impression (53), des données d'image tramée sur la base des données d'impression alimentées séquentiellement ;
le traitement d'image sur la base d'informations de détail de traitement se rapportant aux détails déterminés de traitement sur les données d'image tramée générées ; et
la génération des données d'impression traitées pour amener l'imprimante (20) à produire un imprimé des données d'image tramée soumises au traitement d'image ;
dans lequel la surveillance comprend en outre d'alimenter séquentiellement les données d'impression traitées dans le pilote de port (34) et de délivrer les données d'impression traitées depuis le port (15).

5. Produit de programme lisible par ordinateur pour amener un ordinateur (10) à fonctionner comme un dispositif de demande d'impression connecté en communication à une imprimante (20), le dispositif de demande d'impression (10) comprenant un port (15) configuré pour connecter en communication l'imprimante (20) et le dispositif de demande d'impression (10), un pilote de port (34) configuré pour délivrer des données d'impression à partir du port (15) et alimenter les données d'impression dans l'imprimante (20), une unité de spouleur (32) configurée pour alimenter séquentiellement des données d'impression dans le pilote de port (34) de sorte que les données d'impression soient délivrées à partir du port (15), les données d'impression étant générées séquentiellement par un quelconque d'une pluralité de programmes (33a, 33b) et incluant des données indiquant une chaîne de caractères à imprimer, une unité de moniteur (36) et une unité de conversion de données d'impression (35), dans lequel le produit de programme amène l'ordinateur (10) à effectuer les étapes de la revendication 4.

6. Système d'impression (1) selon la revendication 1, comprenant en outre une unité de commande (11) qui mémorise dans une unité de mémorisation (12) au moins une partie de la chaîne de caractères à imprimer et les données d'image tramée soumises au traitement d'image d'une manière associée.

7. Procédé de commande du système d'impression selon la revendication 4, comprenant en outre de mémoriser au moins une partie de la chaîne de caractères à imprimer et les données d'image tramée soumises au traitement d'image d'une manière associée.

8. Produit de programme selon la revendication 5, amenant l'ordinateur (10) à effectuer des procédures comprenant en outre de mémoriser dans une unité de mémorisation (12) au moins une partie de la chaîne de caractères à imprimer et les données d'image tramée soumises au traitement d'image d'une manière associée.
